# EUROPEAN PATENT APPLICATION

(11) **EP 3 950 194 A1**
(43) Date of publication of application: **09.02.2022**
(21) Application number: 20778357.2
(22) Date of filing: 25.03.2020
(51) Int. Cl.: B23B 51/00, B22F 3/20, B22F 7/00, B23B 27/14, B23B 27/20, B23C 5/10, B23C 5/16, B23D 77/00

(54) **BASE MATERIAL FOR HARD SINTERED COMPACT, HARD SINTERED COMPACT, AND CUTTING TOOL**

(30) Priority: 26.03.2019 JP 2019058625
(71) Applicant: Mitsubishi Materials Corporation, Tokyo 100-8117 (JP)
(72) Inventor: MATSUO Toshihiko, Naka-shi, Ibaraki 311-0102 (JP); KOSHIYAMA Masayuki, Naka-shi, Ibaraki 311-0102 (JP); FUKATA Koji, Tokyo 100-8117 (JP); HAMADA Yoichi, Naka-shi, Ibaraki 311-0102 (JP)
(74) Representative: Gille Hrabal Partnerschaftsgesellschaft mbB Patentanwälte
(86) International application number: PCT/JP2020/013297
(87) International publication number: WO 2020/196611

(57) **Abstract**

The present invention provides a base material (1) for a hard sintered material having a multi-stage columnar shape having a central axis (C) and extending in an axial direction of the central axis (C). The base material (1) for the hard sintered material includes a smaller-diameter portion (2), a larger-diameter portion (3) having an outer diameter larger than an outer diameter of the smaller-diameter portion (2), a base material end surface (4) located between a one end portion in the axial direction of an outer peripheral surface of the larger-diameter portion (3) and the other end portion in the axial direction of the smaller-diameter portion (2), and facing toward the one end portion in the axial direction, and a first inclined portion (6) disposed in at least a portion in a circumferential direction of an annular corner portion (5) to which an outer peripheral surface of the larger-diameter portion (3) and the base material end surface (4) are connected. The first inclined portion (6) is located inward in a radial direction toward the one end portion in the axial direction.

## Description

### TECHNICAL FIELD

The present invention relates to a base material for a hard sintered material, a hard sintered material, and a cutting tool.

Priority is claimed on Japanese Patent Application No. 2019-058625, filed March 26, 2019, the content of which is incorporated herein by reference.

### BACKGROUND ART

In the related art, for example, a cutting tool such as an end mill, a reamer, and a drill is known. The cutting tool is manufactured by performing a grinding operation on a columnar tool material to form a chip discharge flute or a cutting edge. The tool material is manufactured by brazing and bonding a hard sintered material forming a cutting portion and a shank made of cemented carbide to each other.

The hard sintered material includes a multi-stage columnar base material and a cylinder portion that covers a smaller-diameter portion of the base material. The base material is made of cemented carbide, and the cylinder portion is made of polycrystalline diamond (PCD) or polycrystalline cubic boron nitride (PcBN). The base material and the cylinder portion are sintered integrally to form the hard sintered material. For example, as the hard sintered material in the related art, those disclosed in Patent Documents 1 and 2 are known.

### [Citation List]

### [Patent Documents]

[Patent Document 1]
   Japanese Patent No. 3055803
[Patent Document 2]
   Japanese Patent No. 5906355

### SUMMARY OF INVENTION

### Technical Problem

In the hard sintered material, a coefficient of linear expansion (coefficient of thermal expansion) of the base material and a coefficient of linear expansion of the cylinder portion are significantly different from each other. For example, when the base material is made of the cemented carbide and the cylinder portion is made of the PCD, the coefficient of linear expansion of the cylinder portion is approximately half of the coefficient of linear expansion of the base material. Therefore, when the hard sintered material and the shank are brazed, cracks may occur near an interface between the cylinder portion and the base material due to thermal stress, in some cases.

In view of the above-described circumstances, one object of the present invention is to provide a hard sintered material for a base material, a hard sintered material, and a cutting tool which can prevent the occurrence of cracks in the hard sintered material.

### Solution to Problem

One aspect of the present invention provides a base material for a hard sintered material having a multi-stage columnar shape having a central axis and extending in an axial direction of the central axis. The base material for the hard sintered material includes a smaller-diameter portion, a larger-diameter portion having an outer diameter larger than an outer diameter of the smaller-diameter portion, a base material end surface located between a one end portion in the axial direction of an outer peripheral surface of the larger-diameter portion and the other end portion in the axial direction of the smaller-diameter portion, and facing toward the one end portion in the axial direction, and a first inclined portion disposed in at least a portion in a circumferential direction of an annular corner portion where the outer peripheral surface of the larger-diameter portion and the base material end surface are connected. The first inclined portion is located inward in a radial direction toward the one end portion in the axial direction.

In addition, another aspect of the present invention provides a hard sintered material including a base material for the hard sintered material, and a cylinder portion having a cylindrical shape covering the smaller-diameter portion, having a lower coefficient of linear expansion and higher hardness than those of the base material for the hard sintered material, and sintered integrally with the base material for the hard sintered material. An inner peripheral surface of the cylinder portion is bonded to an outer peripheral surface of the smaller-diameter portion. A cylinder portion end surface facing the other side of the cylinder portion in the axial direction is bonded to the base material end surface. The cylinder portion has a second inclined portion disposed in at least a portion in the circumferential direction of an annular corner portion where the outer peripheral surface of the cylinder portion and the cylinder portion end surface are connected. The second inclined portion is located inward in the radial direction toward the one end portion in the axial direction, and is bonded to the first inclined portion.

In addition, still another aspect of the present invention provides a cutting tool including a cutting portion in which a chip discharge flute and a cutting edge which extend in an axial direction are provided in the outer peripheral portion of the hard sintered material, and a shank connected to the cutting portion in the axial direction. The cutting edge is disposed in the cylinder portion.

According to the base material for the hard sintered material, the hard sintered material, and the cutting tool of the present invention, the first inclined portion is located in the corner portion where the outer peripheral surface of the larger-diameter portion of the base material and the base material end surface are connected. In addition, the second inclined portion bonded to the first inclined portion is provided in the cylinder portion sintered integrally with the base material. Compared to a configuration in the related art in which the first inclined portion and the second inclined portion are not provided, in the present invention, the first inclined portion and the second inclined portion are provided. In this manner, a volume of the base material decreases, and a volume of the cylinder portion increases. That is, the volume of the base material is minimized, and the volume of the cylinder portion is reliably secured. In this manner, when the hard sintered material and the shank are brazed, it is possible to reduce thermal stress received from the base material by the cylinder portion. In addition to an advantageous effect of reducing the thermal stress, an advantageous effect of increasing bonding strength between the base material and the cylinder portion can be obtained by increasing a contact area between the base material and the cylinder portion.

The thermal stress generated when the hard sintered material and the shank are brazed acts in a direction perpendicular to the central axis of the base material. That is, during brazing, a shearing force is likely to be generated along a surface direction of the base material end surface and the cylinder portion end surface. In the present invention, the first inclined portion recessed in the axial direction from the base material end surface is provided, and the second inclined portion protruding in the axial direction from the cylinder portion end surface is provided. Therefore, during the brazing, the thermal stress acting in a shear direction perpendicular to the central axis is reduced by an amount such that a force is released in a direction perpendicular to the first inclined portion and the second inclined portion.

Therefore, according to the present invention, it is possible to provide a hard sintered material which can withstand thermal stress during brazing, and it is possible to prevent the occurrence of cracks in the hard sintered material. Thus, a cutting tool using the hard sintered material for the cutting portion can be efficiently and stably manufactured.

In the base material for a hard sintered material, it is preferable to adopt a configuration as follows. In a vertical sectional view along the central axis, an angle formed between a virtual plane perpendicular to the central axis and the first inclined portion is 10° or larger and 75° or smaller.

In the vertical sectional view, when the angle formed between the virtual plane perpendicular to the central axis and the first inclined portion is 10° or larger, the depth in which the first inclined portion is recessed in the axial direction from the base material end surface is reliably secured, and the volume of the base material is stably minimized. In this manner, the thermal stress received by the cylinder portion sintered integrally with the base material from the base material during the brazing can be stably reduced. In addition, during the brazing, stress can be easily released in the direction perpendicular to the first inclined portion, and it is possible to more stably prevent the occurrence of cracks in the hard sintered material.

In the vertical sectional view, when the angle formed between the virtual plane perpendicular to the central axis and the first inclined portion is 75° or smaller, it is possible to prevent a possibility that the first inclined portion may be too close to the end surface of the larger-diameter portion which faces the other side in the axial direction. That is, it is possible to prevent a possibility that the first inclined portion may be too close to a brazing location (bonding portion) between the hard sintered material and the shank. In this manner, in the cylinder portion sintered integrally with the base material, the second inclined portion bonded to the first inclined portion is disposed away from a heat source for induction heating during the brazing, and it is possible to prevent a possibility that material properties of the second inclined portion may be changed. Specifically, for example, when the cylinder portion is made of PCD, it is possible to prevent a problem in which diamond particles forming the second inclined portion are graphitized by the heat source and strength is lowered.

In the base material for the hard sintered material, it is preferable to adopt a configuration as follows. A maximum depth in which the first inclined portion is recessed inward in the radial direction from the outer peripheral surface of the larger-diameter portion is equal to or larger than 5% of a diameter of the larger-diameter portion, and is equal to or smaller than a value of a difference between a radius of the larger-diameter portion and a radius of the smaller-diameter portion.

The maximum depth in which the first inclined portion is recessed inward in the radial direction from the outer peripheral surface of the larger-diameter portion is equal to or larger than 5% of the diameter of the larger-diameter portion, the length of the first inclined portion in the radial direction is reliably secured, and the volume of the base material is stably minimized. In this manner, the thermal stress received by the cylinder portion sintered integrally with the base material from the base material during the brazing can be stably reduced. In addition, during the brazing, stress can be easily released in the direction perpendicular to the first inclined portion, and it is possible to more stably prevent the occurrence of cracks in the hard sintered material.

When the maximum depth in which the first inclined portion is recessed inward in the radial direction from the outer peripheral surface of the larger-diameter portion is equal to or smaller than the value of the difference between the radius of the larger-diameter portion and the radius of the smaller-diameter portion, the first inclined portion is prevented from interfering with the smaller-diameter portion. Accordingly, the base material can be stably manufactured.

In the base material for the hard sintered material, it is preferable to adopt a configuration as follows. The first inclined portion has a recessed shape whose depth in the radial direction becomes deeper toward the one end portion in the axial direction. A plurality of the first inclined portions are provided in the corner portion at an interval from each other in a circumferential direction.

In this case, for example, the first inclined portion has the recessed shape such as a flute shape (slit shape), and the plurality of first inclined portions are provided at an equal interval or an unequal interval from each other in the circumferential direction in the corner portion where the outer peripheral surface of the larger-diameter portion and the base material end surface are connected. Therefore, the first inclined portion can be more freely disposed, and it is possible to easily cope with various types of hard sintered materials used in various types of cutting tools.

In the above-described configuration, when the hard sintered material is provided with a shape of the chip discharge flute or the cutting edge to form the cutting portion of the cutting tool, some of the plurality of first inclined portions may be removed by performing a grinding operation.

In the base material for the hard sintered material, it is preferable that a length of the first inclined portion in the circumferential direction be equal to or larger than 10% and equal to or smaller than 80% of a diameter of the larger-diameter portion.

When the length of the first inclined portion in the circumferential direction is equal to or larger than 10% of the diameter of the larger-diameter portion, a capacity of the first inclined portion recessed in the corner portion where the outer peripheral surface of the larger-diameter portion of the base material and the base material end surface are connected is reliably secured, and the volume of the base material is stably minimized. In this manner, the thermal stress received by the cylinder portion sintered integrally with the base material from the base material during the brazing can be stably reduced. In addition, during the brazing, stress can be easily released by the first inclined portion having a large capacity, and it is possible to stably prevent the occurrence of cracks in the hard sintered material.

When the length of the first inclined portion in the circumferential direction is equal to or smaller than 80% of the diameter of the larger-diameter portion, the number of the first inclined portions having a recessed shape recessed in the corner portion which can be disposed in the circumferential direction is secured, and a total area of the wall surface portion facing the circumferential direction of the plurality of first inclined portions is reliably secured. In this manner, a total area where the plurality of first inclined portions and the plurality of second inclined portions are in contact with each other in the circumferential direction is reliably secured, and it becomes easier to withstand the thermal stress generated during the brazing.

In the base material for the hard sintered material, it is preferable to adopt a configuration as follows. The first inclined portion has an inclined surface located inward in the radial direction toward the one end portion in the axial direction, and a pair of side wall surfaces connected to both ends of the inclined surface in the circumferential direction, and disposed opposite to each other at an interval from each other in the circumferential direction.

In this case, for example, compared to a case where the first inclined portion is formed in a V-shaped cross section by two wall surfaces, the capacity of the first inclined portion can be reliably secured, and the volume of the base material can be minimized accordingly. In this manner, the thermal stress received by the cylinder portion sintered integrally with the base material from the base material during the brazing can be stably reduced. In addition, during the brazing, stress can be easily released by the first inclined portion having a large capacity, and it is possible to stably prevent the occurrence of cracks in the hard sintered material.

In the base material for the hard sintered material, it is preferable that the pair of side wall surfaces be separated from each other in the circumferential direction toward an outer side in the radial direction.

In this case, the capacity of the first inclined portion can be more reliably secured, and the volume of the base material can be further minimized.

In the base material for the hard sintered material, it is preferable that the first inclined portion be disposed over an entire circumference of the corner portion.

In this case, the first inclined portion has an annular shape, and is provided over an entire area in the circumferential direction in the corner portion where the outer peripheral surface of the larger-diameter portion and the base material end surface are connected. Therefore, the capacity of the first inclined portion can be stably and reliably secured, and the volume of the base material can be minimized accordingly. In this manner, the thermal stress received by the cylinder portion sintered integrally with the base material from the base material during the brazing can be stably reduced. In addition, during the brazing, stress can be easily released by the first inclined portion having a large capacity, and it is possible to stably prevent the occurrence of cracks in the hard sintered material.

In the base material for the hard sintered material, it is preferable that the first inclined portion have a concave surface portion having a concave surface shape.

In this case, a surface area of the wall surface forming the first inclined portion can be reliably secured, and the bonding strength between the first inclined portion and the second inclined portion of the cylinder portion sintered integrally with the base material is improved. In addition, it is possible to adopt a configuration in which a location on which the thermal stress is concentrated is less likely to appear near the wall surface of the first inclined portion, and it is possible to further prevent the occurrence of cracks in the hard sintered material. In addition, it is easy to more reliably secure the capacity of the first inclined portion.

In the base material for the hard sintered material, it is preferable that the first inclined portion have a convex surface portion having a convex surface shape.

In this case, a surface area of the wall surface forming the first inclined portion can be reliably secured, and the bonding strength between the first inclined portion and the second inclined portion of the cylinder portion sintered integrally with the base material is improved. In addition, it is possible to adopt a configuration in which a location on which the thermal stress is concentrated is less likely to appear near the wall surface of the first inclined portion, and it is possible to further prevent the occurrence of cracks in the hard sintered material.

In the hard sintered material, it is preferable to adopt a configuration as follows. The base material for the hard sintered material has a Young's modulus of 300 GPa or higher. The cylinder portion has a Young's modulus of 600 GPa or higher.

When the Young's modulus of the base material for the hard sintered material is 300 GPa or higher, the rigidity can be stably secured, for example, in a case where the base material is used for the cutting tool such as an end mill.

In addition, when the Young's modulus of the cylinder portion is 600 GPa or higher, wear resistance can be stably secured, for example, in a case where the cylinder portion is used for the cutting tool such as the end mill.

In the hard sintered material, it is preferable to adopt a configuration as follows. The base material for the hard sintered material is made of any one of cemented carbide, cermet, and ceramics. The cylinder portion is made of any one of polycrystalline diamond and polycrystalline cubic boron nitride.

### Advantageous Effects of Invention

According to the base material, the hard sintered material, and the cutting tool for the hard sintered material in an aspect of the present invention, it is possible to prevent the occurrence of cracks in the hard sintered material.

### BRIEF DESCRIPTION OF DRAWINGS

Fig. 1 is a top view showing a hard sintered material of a first embodiment.
Fig. 2 is a side view and a side sectional view (vertical sectional view) showing the hard sintered material of the first embodiment.
Fig. 3 is a top view showing a base material for a hard sintered material of the first embodiment.
Fig. 4 is a side view and a side sectional view (vertical sectional view) showing the base material for the hard sintered material of the first embodiment.
Fig. 5 is a perspective view showing the base material for the hard sintered material of the first embodiment.
Fig. 6 is a side view showing a cutting tool of the first embodiment.
Fig. 7 is a perspective view showing a first modification example of the base material for the hard sintered material of the first embodiment.
Fig. 8 is a top view showing the first modification example of the base material for the hard sintered material of the first embodiment.
Fig. 9 is a perspective view showing a second modification example of the base material for the hard sintered material of the first embodiment.
Fig. 10 is a top view showing the second modification example of the base material for the hard sintered material of the first embodiment.
Fig. 11 is a perspective view showing a third modification example of the base material for the hard sintered material of the first embodiment.
Fig. 12 is a top view showing the third modification example of the base material for the hard sintered material of the first embodiment.
Fig. 13 is a perspective view showing a fourth modification example of the base material for the hard sintered material of the first embodiment.
Fig. 14 is a top view showing the fourth modification example of the base material for the hard sintered material of the first embodiment.
Fig. 15 is a perspective view showing a fifth modification example of the base material for the hard sintered material of the first embodiment.
Fig. 16 is a top view showing the fifth modification example of the base material for the hard sintered material of the first embodiment.
Fig. 17 is a side view showing a base material for a hard sintered material of a second embodiment.
Fig. 18 is a side view showing a modification example of the base material for the hard sintered material of the second embodiment.

### DESCRIPTION OF EMBODIMENTS

### <First Embodiment>

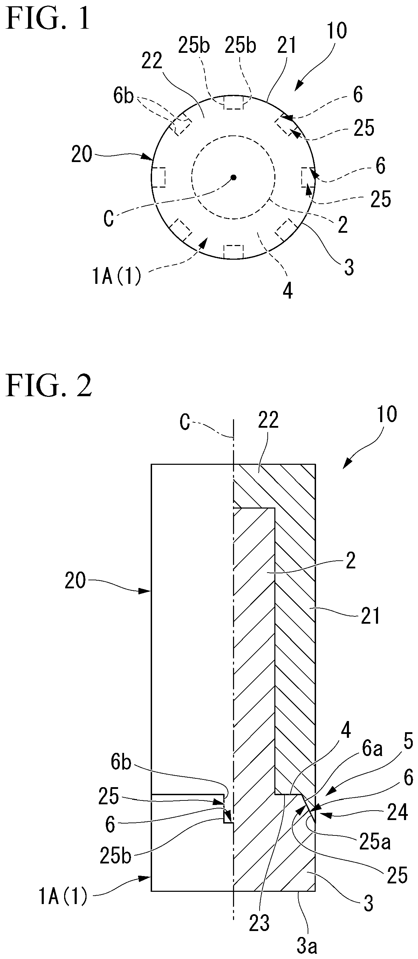

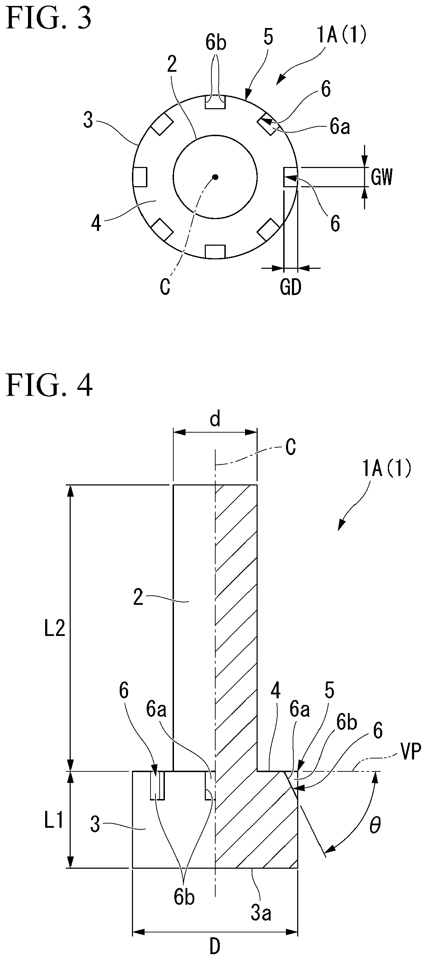

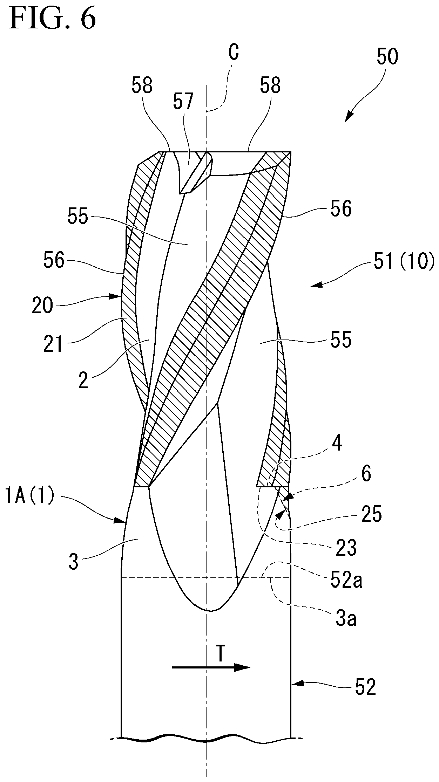

Hereinafter, a base material 1A(1) for a hard sintered material, a hard sintered material 10, and a cutting tool 50 according to a first embodiment of the present invention will be described with reference to Figs. 1 to 6. Figs. 1 and 2 show the hard sintered material 10 of the present embodiment. Figs. 3 to 5 show the base material 1A for the hard sintered material of the present embodiment. Fig. 6 shows the cutting tool 50 of the present embodiment.

In the following description, the base material 1A for the hard sintered material may be simply referred to as a base material 1A in some cases. In addition, the hard sintered material 10 may be referred to as an ultra-hard sintered material 10 or an ultra-high hardness sintered material 10.

As shown in Figs. 1 and 2, the hard sintered material 10 includes the base material 1A for the hard sintered material, and a cylinder portion 20 sintered integrally with the base material 1A for the hard sintered material. The base material 1A has a Young's modulus of 300 GPa or higher. The base material 1A is made of any one of cemented carbide, cermet, and ceramics. The cylinder portion 20 has a Young's modulus of 600 GPa or higher. The cylinder portion 20 is made of any one of polycrystalline diamond (PCD) and polycrystalline cubic boron nitride (PcBN). The cylinder portion 20 has a lower coefficient of linear expansion and higher hardness than those of the base material 1A. The Young's modulus of the base material 1A for the hard sintered material is preferably 550 GPa or higher and 650 GPa or lower, and the Young's modulus of the cylinder portion 20 is preferably 800 GPa or higher and 950 GPa or lower.

The hard sintered material 10 is manufactured as follows. A cylindrical capsule (not shown) is filled with a raw material of the base material 1A as a powder material and a powdery raw material of the cylinder portion 20, and the raw materials are sintered under ultra-high temperature and ultra-high-pressure conditions.

As shown in Figs. 1 to 5, the base material 1A has a multi-stage columnar shape having a central axis C and extending in an axial direction of the central axis C. Specifically, the base material 1A is the multi-stage columnar shape around the central axis C. The base material 1A includes a smaller-diameter portion 2, a larger-diameter portion 3, a base material end surface 4, a corner portion 5, and a first inclined portion 6.

In the present embodiment, a direction in which the central axis C of the base material 1A extends (direction along the central axis C) will be referred to as the axial direction. In the axial direction, the smaller-diameter portion 2 and the larger-diameter portion 3 are disposed at positions different from each other. In the axial direction, a direction from the larger-diameter portion 3 toward the smaller-diameter portion 2 will be referred to as the one end portion in the axial direction, and a direction from the smaller-diameter portion 2 toward the larger-diameter portion 3 will be referred to as the other side in the axial direction.

A direction orthogonal to the central axis C will be referred to as a radial direction. In the radial direction, a direction closer to the central axis C will be referred to as inward in the radial direction, and a direction away from the central axis C will be referred to as outward in the radial direction.

A direction of turning around the central axis C will be referred to as a circumferential direction. In the circumferential direction, a predetermined rotation direction will be referred to as the one end portion in the circumferential direction, and a rotation direction opposite thereto will be referred to as the other side in the circumferential direction.

The central axis C of the base material 1A, the central axis C of the hard sintered material 10, and the central axis C of the cutting tool 50 are common axes, and are disposed coaxially with each other.

The one end portion in the axial direction corresponds to a tip side (upper side in Fig. 6) of the cutting tool 50 shown in Fig. 6. The other side in the axial direction corresponds to a posterior end side (lower side in Fig. 6) of the cutting tool 50.

In the circumferential direction, a direction in which the cutting tool 50 is rotated by a main spindle of a machine tool during a cutting operation may be referred to as a tool rotation direction T, and a rotation direction opposite thereto may be referred to as a direction opposite to the tool rotation direction T (counter-tool rotation direction) in some cases. The one end portion in the circumferential direction in the present embodiment corresponds to the tool rotation direction T, and the other side in the circumferential direction corresponds to the direction opposite to the tool rotation direction T.

In Figs. 1 to 5, the smaller-diameter portion 2 has a columnar shape extending in the axial direction.

The larger-diameter portion 3 has a columnar shape extending in the axial direction. The larger-diameter portion 3 has an outer diameter larger than an outer diameter of the smaller-diameter portion 2. In the present embodiment, an outer diameter (diameter) D of the larger-diameter portion 3 is approximately twice an outer diameter d of the smaller-diameter portion 2. The larger-diameter portion 3 has an axial length shorter than that of the smaller-diameter portion 2. In the present embodiment, a length L1 of the larger-diameter portion 3 in the axial direction is approximately 1/3 times a length L2 of the smaller-diameter portion 2 in the axial direction. An end surface 3a of the larger-diameter portion 3 facing the other side in the axial direction has a planar shape spreading in a direction perpendicular to the central axis C. The end surface 3a has a circular shape.

The base material end surface 4 is located between an end portion on one side of the outer peripheral surface of the larger-diameter portion 3 in the axial direction and an end portion on the other side of the smaller-diameter portion 2 in the axial direction, and faces toward the one end portion in the axial direction. The base material end surface 4 is disposed between an end portion on one end portion of the outer peripheral surface of the larger-diameter portion 3 in the axial direction and an end portion on the other side of the outer peripheral surface of the smaller-diameter portion 2 in the axial direction. The base material end surface 4 has a circular ring shape around the central axis C. In the present embodiment, the base material end surface 4 has a planar shape spreading in the direction perpendicular to the central axis C.

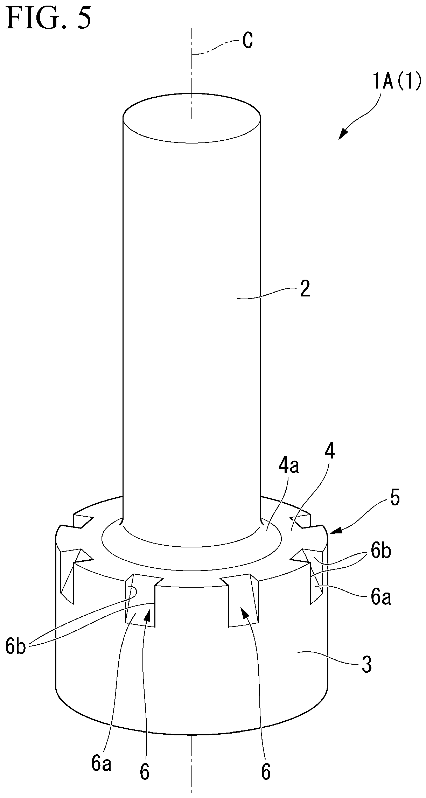

As shown in Fig. 5, the base material end surface 4 may have a concave corner surface portion 4a in the inner peripheral portion connected to the smaller-diameter portion 2 of the base material end surface 4. The concave corner surface portion 4a is a concave surface having a circular ring shape around the central axis C. The concave corner surface portion 4a is located on one end portion in the axial direction as it goes inward in the radial direction. In a vertical sectional view along the central axis C, the concave corner surface portion 4a has a concave surface shape, and is recessed inward in the radial direction and recessed to the other side in the axial direction.

The corner portion 5 is a protruded portion where the outer peripheral surface of the larger-diameter portion 3 and the base material end surface 4 are connected. The corner portion 5 is an annular shape around the central axis C, and extends in the circumferential direction. The corner portion 5 has a circular ring shape. The corner portion 5 may be referred to as the base material corner portion 5.

The first inclined portion 6 is disposed in at least a portion of the corner portion 5 in the circumferential direction. The first inclined portion 6 is located inward in the radial direction toward one end portion in the axial direction. That is, the first inclined portion 6 extends inward in the radial direction toward one end portion in the axial direction. Specifically, an inner portion located inward in the radial direction in the first inclined portion 6, that is, a surface portion or valley portion which is a bottom portion of the first inclined portion 6 is located inward in the radial direction toward the one end portion in the axial direction, and extends to be inclined with respect to the central axis C.

As shown in Fig. 4, in a vertical sectional view along the central axis C, an angle θ formed between a virtual plane VP perpendicular to the central axis C and the first inclined portion 6 is 10° or larger and 75° or smaller. Specifically, in the vertical sectional view, the angle θ is an acute angle out of the acute angle and an obtuse angle which are formed between the virtual plane VP and the inner portion located inward in the radial direction in the first inclined portion 6.

In the vertical sectional view along the central axis C, it is preferable that the angle θ formed between the virtual plane VP perpendicular to the central axis C and the first inclined portion 6 be 45° or larger and 60° or smaller.

In the present embodiment, the first inclined portion 6 has a recessed shape recessed in the corner portion 5, and has a flute shape (slit shape) in the shown example. The first inclined portion 6 extends in the axial direction and the radial direction. The first inclined portion 6 is recessed from the base material end surface 4 to the other side in the axial direction, and is recessed inward in the radial direction from the outer peripheral surface of the larger-diameter portion 3. A plurality of the first inclined portions 6 are provided in the corner portion 5 at an interval from each other in the circumferential direction. In the shown example, a plurality of (8) first inclined portions 6 are disposed at an equal interval (equal pitch) from each other in the circumferential direction. However, the present invention is not limited thereto, and the plurality of first inclined portions 6 may be disposed at an unequal interval (at an unequal pitch) from each other in the circumferential direction.

A depth of the first inclined portion 6 in the axial direction becomes deeper as it goes outward in the radial direction. The depth of the first inclined portion 6 in the radial direction becomes deeper toward the one end portion in the axial direction. As shown in Fig. 3, a maximum depth (flute depth) GD in which the first inclined portion 6 is recessed inward in the radial direction from the outer peripheral surface of the larger-diameter portion 3 is equal to or larger than 5% of a diameter D of the larger-diameter portion 3, and is equal to or smaller than a value (D/2-d/2) of a difference between a radius D/2 of the larger-diameter portion 3 and a radius d/2 of the smaller-diameter portion 2. The maximum depth GD may be referred to as a length in the radial direction in an end portion on the one end portion in the axial direction of the first inclined portion 6.

It is preferable that the maximum depth GD in which the first inclined portion 6 is recessed inward in the radial direction from the outer peripheral surface of the larger-diameter portion 3 be equal to or larger than 10% of the diameter D of the larger-diameter portion 3 and equal to or smaller than 20% of the diameter D of the larger-diameter portion 3.

A length (flute width) GW of the first inclined portion 6 in the circumferential direction is equal to or larger than 10% and is equal to or smaller than 80% of the diameter D of the larger-diameter portion 3. In the present embodiment, the length GW of the first inclined portion 6 in the circumferential direction corresponds to an opening size in an outer end portion in the radial direction of the first inclined portion 6 when the base material 1A is viewed in the axial direction as shown in Fig. 3.

It is preferable that the length GW of the first inclined portion 6 in the circumferential direction be equal to or larger than 10% and equal to or smaller than 20% of the diameter D of the larger-diameter portion 3.

As shown in Figs. 3 to 5, the first inclined portion 6 has a first inclined surface (inclined surface) 6a and a pair of first side wall surfaces (side wall surfaces) 6b.

The first inclined surface 6a is located inward in the radial direction toward the one end portion in the axial direction. In the present embodiment, the first inclined surface 6a has a planar shape. The first inclined surface 6a faces the outer side in the radial direction and one end portion in the axial direction. The first inclined surface 6a has a quadrangular shape.

The pair of first side wall surfaces 6b are connected to both ends of the first inclined surface 6a in the circumferential direction, and are disposed opposite to each other at an interval from each other in the circumferential direction. In the present embodiment the first side wall surface 6b has a planar shape spreading in the direction perpendicular to the circumferential direction (axial direction and radial direction). The first side wall surface 6b has a triangular shape.

As shown in Figs. 1 and 2, the cylinder portion 20 has a cylindrical shape that covers the smaller-diameter portion 2. The cylinder portion 20 has a cylindrical shape around the central axis C, and extends in the axial direction. In the present embodiment, the cylinder portion 20 has a ridged cylindrical shape. The cylinder portion 20 has a surrounding wall portion 21, a top wall portion 22, a cylinder portion end surface 23, a corner portion 24, and a second inclined portion 25.

The surrounding wall portion 21 has a cylindrical shape extending in the axial direction. The surrounding wall portion 21 surrounds the smaller-diameter portion 2 from the outside in the radial direction. The inner peripheral surface of the surrounding wall portion 21 is fixed to the outer peripheral surface of the smaller-diameter portion 2. The inner peripheral surface of the surrounding wall portion 21 (that is, the inner peripheral surface of the cylinder portion 20) is bonded to the outer peripheral surface of the smaller-diameter portion 2.

The top wall portion 22 is connected to an end portion on one side of the surrounding wall portion 21 in the axial direction. The top wall portion 22 has a disk shape around the central axis C. A pair of plate surfaces of the top wall portion 22 face the axial direction. The plate surface of the top wall portion 22 which faces the other side in the axial direction is fixed to an end surface of the smaller-diameter portion 2 which faces toward the one end portion in the axial direction. The plate surface of the top wall portion 22 which faces the other side in the axial direction is bonded to an end surface of the smaller-diameter portion 2 which faces toward the one end portion in the axial direction.

The cylinder portion end surface 23 is located in an end portion on the other side of the surrounding wall portion 21 in the axial direction, and faces the other side in the axial direction. The cylinder portion end surface 23 has a circular ring shape around the central axis C. In the present embodiment, the cylinder portion end surface 23 has a planar shape spreading in the direction perpendicular to the central axis C. The cylinder portion end surface 23 is fixed to the base material end surface 4. The cylinder portion end surface 23 is bonded to the base material end surface 4.

The corner portion 24 is a protruded portion where the outer peripheral surface of the surrounding wall portion 21 (that is, the outer peripheral surface of the cylinder portion 20) and the cylinder portion end surface 23 are connected. The corner portion 24 has an annular shape around the central axis C, and extends in the circumferential direction. The corner portion 24 has a circular ring shape. The corner portion 24 may be referred to as the cylinder portion corner portion 24.

The second inclined portion 25 is disposed in at least a portion of the corner portion 24 in the circumferential direction. The second inclined portion 25 is located inward in the radial direction toward the one end portion in the axial direction. Specifically, an inner portion located inward in the radial direction in the second inclined portion 25, that is, a surface portion or a ridge portion facing inward in the radial direction in the second inclined portion 25 is located inward in the radial direction toward the one end portion in the axial direction, and extends to be inclined with respect to the central axis C. The second inclined portion 25 is fixed to the first inclined portion 6. The second inclined portion 25 is bonded to the first inclined portion 6.

In the present embodiment, the second inclined portion 25 has a protruded shape protruding in the corner portion 24, and specifically, has a projection shape or a rib shape. The second inclined portion 25 extends in the axial direction and the radial direction. The second inclined portion 25 protrudes from the cylinder portion end surface 23 to the other side in the axial direction. An outer portion (outer peripheral surface) located outside the second inclined portion 25 in the radial direction overlaps the outer peripheral surface of the surrounding wall portion 21 when viewed in the axial direction. The outer portion located outside the second inclined portion 25 in the radial direction is disposed to be flush with the outer peripheral surface of the surrounding wall portion 21.

A plurality of the second inclined portions 25 are provided in the corner portion 24 at an interval from each other in the circumferential direction. In the shown example, the plurality of (eight) second inclined portions 25 are disposed at an equal interval (equal pitch) from each other in the circumferential direction. However, the present invention is not limited thereto, and the plurality of second inclined portions 25 may be disposed at an unequal interval (at an unequal pitch) from each other in the circumferential direction.

In the vertical sectional view along the central axis C, the angle formed between the virtual plane VP perpendicular to the central axis C and the second inclined portion 25 is the same value as that of the above-described angle θ (10° or larger and 75° or smaller). Specifically, in the vertical sectional view, the angle is the acute angle out of the acute angle and obtuse angle which are formed between the virtual plane VP and the inner portion located inward in the radial direction in the second inclined portion 25.

The length (height) of the second inclined portion 25 in the axial direction increases as it goes outward in the radial direction. The length of the second inclined portion 25 in the radial direction increases toward the one end portion in the axial direction. The maximum length of the second inclined portion 25 in the radial direction is the same value as that of the maximum depth GD of the first inclined portion 6 described above. The maximum length of the second inclined portion 25 in the radial direction is equal to the length in the radial direction from the outer peripheral surface of the surrounding wall portion 21 to the inner end portion of the second inclined portion 25 in the radial direction. The maximum length of the second inclined portion 25 in the radial direction may be referred to as the length in the radial direction in an end portion on one side in the axial direction of the second inclined portion 25.

The length (projection width, rib width) of the second inclined portion 25 in the circumferential direction is the same value as that of the length GW in the circumferential direction of the first inclined portion 6 described above.

The second inclined portion 25 has a second inclined surface 25a and a pair of second side wall surfaces 25b.

The second inclined surface 25a is located inward in the radial direction toward the one end portion in the axial direction. In the present embodiment, the second inclined surface 25a has a planar shape. The second inclined surface 25a faces inward in the radial direction and the other side in the axial direction. The second inclined surface 25a has a quadrangular shape. The second inclined surface 25a has the same shape as that of the first inclined surface 6a. The second inclined surface 25a is bonded to the first inclined surface 6a.

The pair of second side wall surfaces 25b are connected to both ends of the second inclined surface 25a in the circumferential direction, and are disposed back-to-back at an interval from each other in the circumferential direction. In the present embodiment, the second side wall surface 25b has a planar shape spreading in the direction perpendicular to the circumferential direction (axial direction and radial direction). The second side wall surface 25b has a triangular shape. The second side wall surface 25b has the same shape as that of the first side wall surface 6b. The second side wall surface 25b is bonded to the first side wall surface 6b.

The cutting tool 50 is a rotary cutting tool (milling tool), and specifically, is an end mill, a reamer, or a drill. As shown in Fig. 6, the cutting tool 50 of the present embodiment is the end mill.

In the outer peripheral portion of the above-described hard sintered material 10, the cutting tool 50 includes a cutting portion 51 provided with a chip discharge flute 55 and a cutting edge (peripheral cutting edge) 56 which extends in the axial direction, and a shank 52 connected to the cutting portion 51 in the axial direction. That is, the cutting portion 51 is manufactured as follows. The chip discharge flute 55 and the cutting edge 56 are subjected to a grinding operation in the outer peripheral portion of the hard sintered material 10 by a grinding wheel. That is, the hard sintered material 10 is a material for manufacturing the cutting portion 51, and is an intermediate body of the cutting portion 51 manufactured in a manufacturing process of the cutting tool 50. The outer peripheral surface of the cutting portion 51 is disposed in the surrounding wall portion 21 of the cylinder portion 20.

When the hard sintered material 10 is provided with a shape of the chip discharge flute 55 or the cutting edge 56 to form the cutting portion 51 of the cutting tool 50, some of the plurality of first inclined portions 6 and some of the plurality of second inclined portions 25 may be selectively removed by performing a grinding operation.

The shank 52 is made of cemented carbide. The shank 52 has a columnar shape extending in the axial direction. For example, the cutting portion 51 and the shank 52 are bonded to each other by brazing through induction heating under vacuum using Ag wax. That is, an end surface (end surface of the larger-diameter portion 3) 3a facing the other side of the cutting portion 51 in the axial direction and an end surface 52a facing toward the one end portion of the shank 52 in the axial direction are bonded to each other by the brazing.

The shank 52 is detachably attached to a main spindle of a machine tool (not shown). The cutting tool 50 is rotated around the central axis C by the main spindle of the machine tool to perform a cutting operation (rotating cutting process) on a work material. For example, the work material is made of metal.

The chip discharge flute 55 is recessed inward in the radial direction from the outer peripheral surface of the cutting tool 50, and extends in the axial direction. In the present embodiment, the chip discharge flute 55 extends in a helical shape in a direction opposite to the tool rotation direction T from an end portion (tip portion) on one side of the cutting tool 50 in the axial direction toward the other side (posterior end side) in the axial direction. However, the present invention is not limited thereto, and the chip discharge flute 55 may extend in the axial direction in parallel with the central axis C.

At least one chip discharge flute 55 is provided in the cutting tool 50. In the present embodiment, a plurality of the chip discharge flutes 55 are provided. The plurality of chip discharge flutes 55 are disposed at an interval from each other in the circumferential direction. In the present embodiment, the plurality of chip discharge flutes 55 are disposed on the outer circumference of the cutting tool 50 at an equal interval (at an equal pitch) from each other in the circumferential direction to be located at rotationally symmetrical positions around the central axis C. The plurality of chip discharge flutes 55 may be disposed at an unequal interval (at an unequal pitch) from each other in the circumferential direction.

The cutting edge 56 is disposed in the cutting portion 51, and extends in the axial direction. The cutting edge 56 is formed in an intersecting ridge of the wall surface of the chip discharge flute 55 which faces the tool rotation direction T and the outer peripheral surface of the cutting portion 51. The cutting edge 56 extends in a helical shape in the direction opposite to the tool rotation direction T from the end portion (tip portion) on one side of the cutting portion 51 in the axial direction toward the other side in the axial direction. However, the present invention is not limited thereto, and the cutting edge 56 may extend in the axial direction in parallel with the central axis C.

The number of the cutting edges 56 is the same as the number of the chip discharge flutes 55. In the present embodiment, a plurality of the cutting edges 56 are provided. Each of the cutting edges 56 extends along each of the chip discharge flutes 55. In the present embodiment, the plurality of cutting edges 56 are disposed on the outer circumference of the cutting portion 51 at an equal interval (at an equal pitch) from each other in the circumferential direction to be located at rotationally symmetrical positions around the central axis C. The plurality of cutting edges 56 may be disposed at an unequal interval (at an unequal pitch) from each other in the circumferential direction.

The cutting edge 56 is disposed in the surrounding wall portion 21 of the cylinder portion 20 of the hard sintered material 10, and forms a part of the outer peripheral portion of the cutting portion 51.

The chip discharge flute 55 is disposed over the surrounding wall portion 21 and the smaller-diameter portion 2 of the cylinder portion 20. On the wall surface of the chip discharge flute 55 which faces the tool rotation direction T, the outer peripheral portion adjacent to the cutting edge 56, that is, a rake face of the cutting edge 56 is disposed in the surrounding wall portion 21 of the cylinder portion 20.

On the outer peripheral surface of the cutting portion 51, a portion adjacent to the cutting edge 56, that is, a flank face of the cutting edge 56 is disposed in the surrounding wall portion 21 of the cylinder portion 20.

The cutting portion 51 of the present embodiment has a gash 57 and an end cutting edge 58, in addition to the chip discharge flute 55 and the cutting edge 56. The gash 57 is located in an end portion on one side of the chip discharge flute 55 in the axial direction. The gash 57 has a flute shape extending in the radial direction. The gash 57 is provided in each of the plurality of chip discharge flutes 55.

The end cutting edge 58 is disposed in an end portion on one side of the cutting portion 51 in the axial direction, and extends in the radial direction. A plurality of the end cutting edges 58 are provided at an interval from each other in the circumferential direction. The end cutting edge 58 may be disposed in the top wall portion 22 of the cylinder portion 20.

According to the base material 1A, the hard sintered material 10 and the cutting tool 50 for the hard sintered material of the present embodiment described above, the first inclined portion 6 is located in the corner portion 5 where the outer peripheral surface of the larger-diameter portion 3 of the base material 1A and the base material end surface 4 are connected. In addition, the second inclined portion 25 bonded to the first inclined portion 6 is provided in the cylinder portion 20 sintered integrally with the base material 1A. Compared to a configuration in the related art in which the first inclined portion 6 and the second inclined portion 25 are not provided, in the present embodiment, the first inclined portion 6 and the second inclined portion 25 are provided. In this manner, a volume of the base material 1A decreases, and a volume of the cylinder portion 20 increases. That is, the volume of the base material 1A is minimized, and the volume of the cylinder portion 20 is reliably secured. In this manner, when the hard sintered material 10 and the shank 52 are brazed, it is possible to reduce the thermal stress received from the base material 1A by the cylinder portion 20. In addition to an advantageous effect of reducing the thermal stress, an advantageous effect of increasing bonding strength between the base material 1A and the cylinder portion 20 can be obtained by increasing a contact area between the base material 1A and the cylinder portion 20.

The thermal stress generated when the hard sintered material 10 and the shank 52 are brazed acts in a direction perpendicular to the central axis C of the base material 1A. That is, during brazing, a shearing force is likely to be generated along a surface direction of the base material end surface 4 and the cylinder portion end surface 23. In the present embodiment, the first inclined portion 6 recessed in the axial direction from the base material end surface 4 is provided, and the second inclined portion 25 protruding in the axial direction from the cylinder portion end surface 23 is provided. Therefore, during the brazing, the thermal stress acting in a shear direction perpendicular to the central axis C is reduced by the amount of force that is released in a direction perpendicular to the first inclined portion 6 and the second inclined portion 25.

Therefore, according to the present embodiment, it is possible to provide the hard sintered material 10 which can withstand thermal stress during brazing, and it is possible to prevent the occurrence of cracks in the hard sintered material 10. Thus, the cutting tool 50 using the hard sintered material 10 for the cutting portion 51 can be efficiently and stably manufactured.

In the present embodiment, in the vertical sectional view along the central axis C, the angle θ formed between the virtual plane VP perpendicular to the central axis C and the first inclined portion 6 is 10° or larger and 75° or smaller.

In the vertical sectional view, when the angle θ formed between the virtual plane VP and the first inclined portion 6 is 10° or larger, the depth in which the first inclined portion 6 is recessed in the axial direction from the base material end surface 4 is reliably secured, and the volume of the base material 1A is stably minimized. In this manner, the thermal stress received by the cylinder portion 20 sintered integrally with the base material 1A from the base material 1A during the brazing can be stably reduced. In addition, during the brazing, stress can be easily released in the direction perpendicular to the first inclined portion 6, and it is possible to more stably prevent the occurrence of cracks in the hard sintered material 10.

In the vertical sectional view, when the angle θ formed between the virtual plane VP and the first inclined portion 6 is 75° or smaller, it is possible to prevent the first inclined portion 6 getting too close to the end surface 3a of the larger-diameter portion 3 which faces the other side in the axial direction. That is, it is possible to prevent the first inclined portion 6 getting too close to a brazing location (bonding portion) between the hard sintered material 10 and the shank 52. In this manner, in the cylinder portion 20 sintered integrally with the base material 1A, the second inclined portion 25 bonded to the first inclined portion 6 is disposed away from a heat source for induction heating during the brazing, and it is possible to prevent a possibility that material properties of the second inclined portion 25 may be changed. Specifically, for example, when the cylinder portion 20 is made of PCD, it is possible to prevent a problem in which diamond particles forming the second inclined portion 25 are graphitized by the heat source and strength is lowered.

In the present embodiment, the maximum depth GD in which the first inclined portion 6 is recessed inward in the radial direction from the outer peripheral surface of the larger-diameter portion 3 is equal to or larger than 5% of the diameter D of the larger-diameter portion 3, and is equal to or smaller than the value (D/2-d/2) of the difference between the radius D/2 of the larger-diameter portion 3 and the radius d/2 of the smaller-diameter portion 2.

When the maximum depth GD in which the first inclined portion 6 is recessed inward in the radial direction from the outer peripheral surface of the larger-diameter portion 3 is equal to or larger than 5% of the diameter D of the larger-diameter portion 3, the length of the first inclined portion 6 in the radial direction is reliably secured, and the volume of the base material 1A is stably minimized. In this manner, the thermal stress received by the cylinder portion 20 sintered integrally with the base material 1A from the base material 1A during the brazing can be stably reduced. In addition, during the brazing, stress can be easily released in the direction perpendicular to the first inclined portion 6, and it is possible to more stably prevent the occurrence of cracks in the hard sintered material 10.

When the maximum depth GD in which the first inclined portion 6 is recessed inward in the radial direction from the outer peripheral surface of the larger-diameter portion 3 is equal to or smaller than the value (D/2-d/2) of the difference between the radius D/2 of the larger-diameter portion 3 and the radius d/2 of the smaller-diameter portion 2, the first inclined portion 6 is prevented from interfering with the smaller-diameter portion 2. Accordingly, the base material 1A can be stably manufactured.

In the present embodiment, for example, the first inclined portion 6 has a recessed shape such as a groove shape, and the plurality of first inclined portions 6 are provided at an equal interval or an unequal interval from each other in the circumferential direction in the corner portion 5 where the outer peripheral surface of the larger-diameter portion 3 and the base material end surface 4 are connected. Therefore, the first inclined portion 6 can be more freely disposed, and it is possible to easily cope with various types of the hard sintered materials 10 used in various types of the cutting tools 50.

In the above-described configuration, during the brazing, in a case where cracks occur in a predetermined set in a plurality of sets of the first inclined portions 6 and the second inclined portions 25, when the hard sintered material 10 is provided with a shape of the chip discharge flute 55 or the cutting edge 56 to form the cutting portion 51 of the cutting tool 50, the predetermined set in which the cracks occur may be selectively removed by performing a grinding operation.

In the present embodiment, the length GW of the first inclined portion 6 in the circumferential direction is equal to or larger than 10% and is equal to or smaller than 80% of the diameter D of the larger-diameter portion 3.

When the length GW of the first inclined portion 6 in the circumferential direction is equal to or larger than 10% of the diameter D of the larger-diameter portion 3, the capacity of the first inclined portion 6 recessed in the corner portion 5 where the outer peripheral surface of the larger-diameter portion 3 of the base material 1A and the base material end surface 4 are connected is reliably secured, and the volume of the base material 1A is stably minimized. In this manner, the thermal stress received by the cylinder portion 20 sintered integrally with the base material 1A from the base material 1A during the brazing can be stably reduced. In addition, during the brazing, stress can be easily released by the first inclined portion 6 having a large capacity, and it is possible to stably prevent the occurrence of cracks in the hard sintered material 10.

When the length GW of the first inclined portion 6 in the circumferential direction is equal to or smaller than 80% of the diameter D of the larger-diameter portion 3, the number of the first inclined portions 6 having a recessed shape recessed in the corner portion 5 which can be disposed in the circumferential direction is secured, and a total area of the wall surface portion (first side wall surface 6b) facing the circumferential direction of the plurality of first inclined portions 6 is reliably secured. In this manner, a total area where the plurality of first inclined portions 6 and the plurality of second inclined portions 25 are in contact with each other in the circumferential direction is reliably secured, and it becomes easier to withstand the thermal stress generated during the brazing.

In the present embodiment, the first inclined portion 6 has the first inclined surface (inclined surface) 6a and the pair of first side wall surfaces (side wall surfaces) 6b.

In this case, for example, compared to a case where the first inclined portion 6 is formed in a V-shaped cross section by two wall surfaces, the capacity of the first inclined portion 6 can be reliably secured, and the volume of the base material 1A can be minimized accordingly. In this manner, the thermal stress received by the cylinder portion 20 sintered integrally with the base material 1A from the base material 1A during the brazing can be stably reduced. In addition, during the brazing, stress can be easily released by the first inclined portion 6 having a large capacity, and it is possible to stably prevent the occurrence of cracks in the hard sintered material 10.

In the present embodiment, the Young's modulus of the base material 1A for the hard sintered material is 300 GPa or higher, and the Young's modulus of the sintered cylinder portion 20 is 600 GPa or higher.

When the Young's modulus of the base material 1A for the hard sintered material is 300 GPa or higher, the rigidity can be stably secured in a case where the base material 1A is used for the cutting tool 50 such as the end mill as in the present embodiment.

In addition, when the Young's modulus of the cylinder portion 20 is 600 GPa or higher, the wear resistance can be stably secured in a case where the cylinder portion 20 is used for the cutting tool 50 such as the end mill as in the present embodiment.

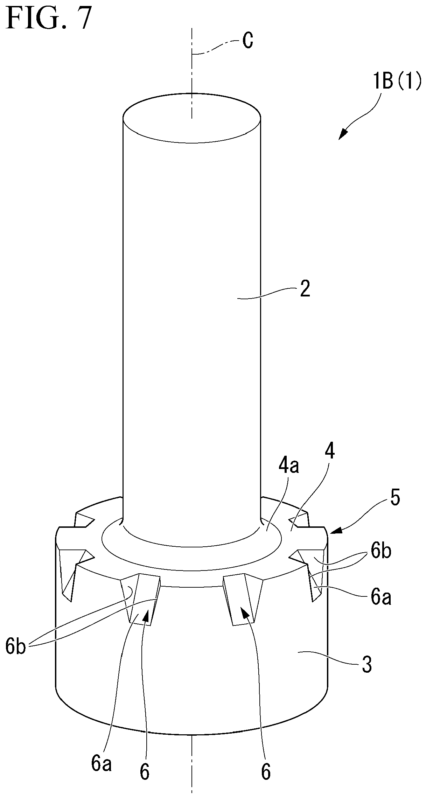

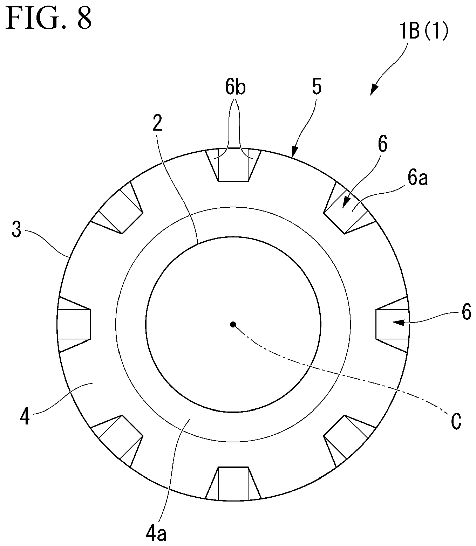

Figs. 7 and 8 show a base material 1B(1) for a hard sintered material according to a first modification example of the present embodiment. In the first modification example, the pair of first side wall surfaces (side wall surfaces) 6b of the first inclined portion 6 are separated from each other in the circumferential direction toward the outer side in the radial direction.

According to the first modification example, the capacity of the first inclined portion 6 can be more reliably secured, and the volume of the base material 1B can be further minimized.

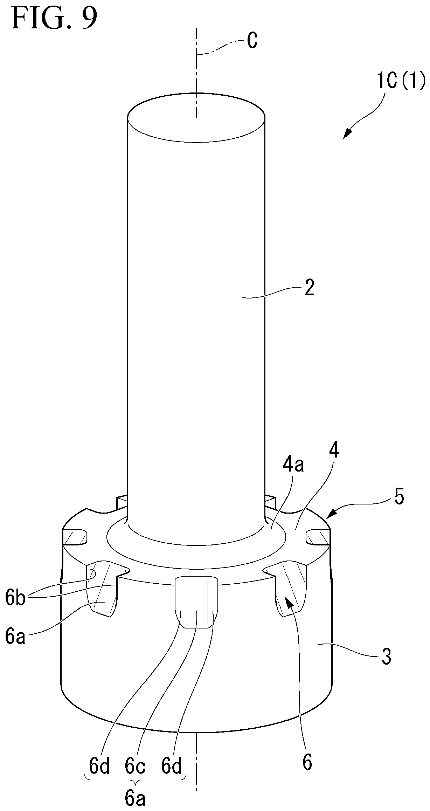

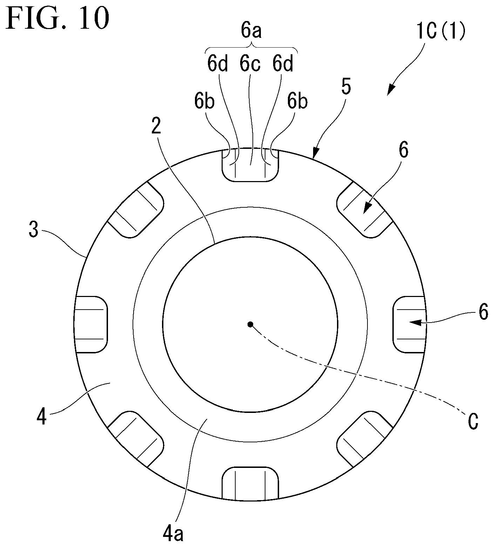

Figs. 9 and 10 show a base material 1C(1) for a hard sintered material according to a second modification example of the present embodiment. In the second modification example, the first inclined surface (inclined surface) 6a of the first inclined portion 6 has a flat surface portion 6c and a pair of recessed surface portions 6d.

The flat surface portion 6c has a planar shape, and is located inward in the radial direction toward the one end portion in the axial direction.

The pair of recessed surface portions 6d are disposed on both sides of the flat surface portion 6c in the circumferential direction. The pair of recessed surface portions 6d are connected to the pair of first side wall surfaces 6b. The recessed surface portion 6d has a recessed curved face shape, and is located inward in the radial direction toward the one end portion in the axial direction.

According to the second modification example, the first inclined surface 6a has the pair of recessed surface portions 6d. Therefore, it is possible to make it difficult to generate a location on which the thermal stress is concentrated near the inner surface (wall surface) of the first inclined portion 6, and it is possible to further prevent the occurrence of cracks in the hard sintered material 10.

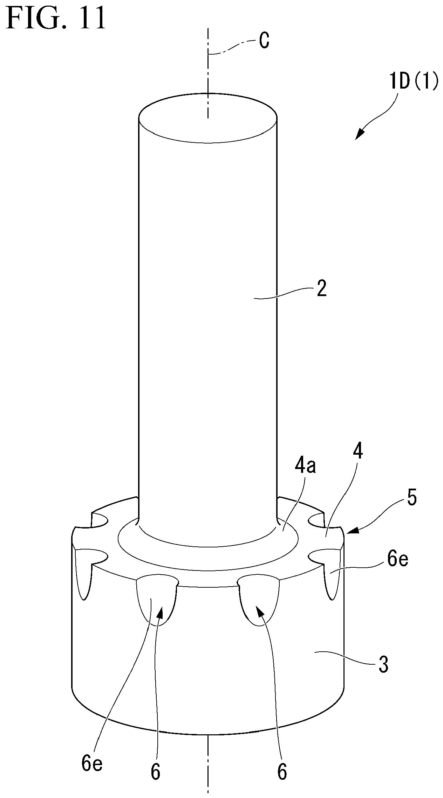

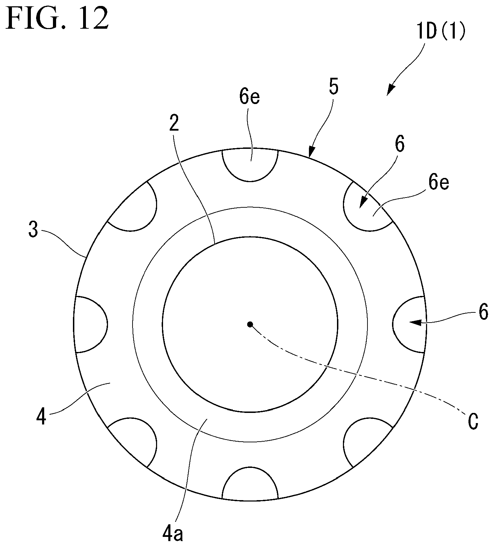

Figs. 11 and 12 show a base material 1D(1) for a hard sintered material according to a third modification example of the present embodiment. In the third modification example, the first inclined portion 6 has a recessed curved face portion 6e having a recessed curved face shape. The recessed curved face portion 6e has a recessed curved line shape recessed inward in the radial direction in a cross-sectional view perpendicular to the central axis C.

According to the third modification example, it is possible to make it difficult to generate a location on which the thermal stress is concentrated near the inner surface (wall surface) of the first inclined portion 6, and it is possible to further prevent the occurrence of cracks in the hard sintered material 10.

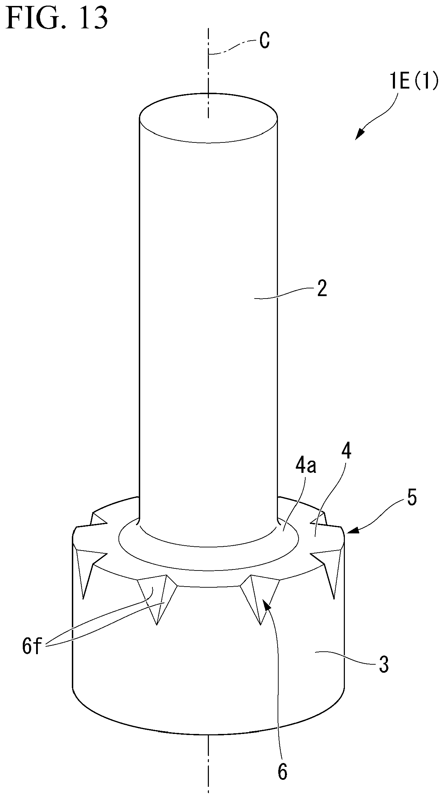

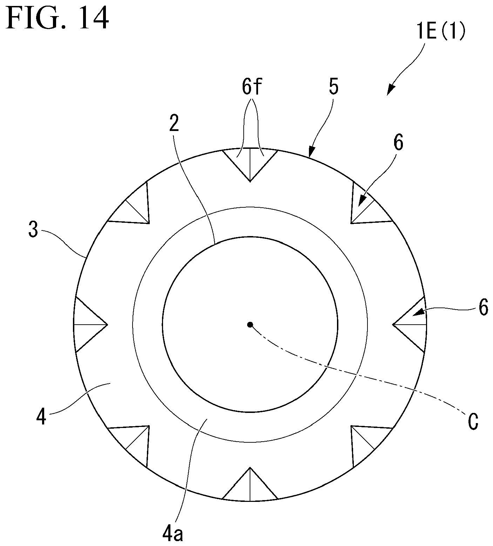

Figs. 13 and 14 show a base material 1E(1) for a hard sintered material according to a fourth modification example of the present embodiment. In the fourth modification example, the first inclined portion 6 has a pair of wall surface portions 6f. The pair of wall surface portions 6f are connected to each other in the circumferential direction. The pair of wall surface portions 6f are separated from each other in the circumferential direction toward the outer side in the radial direction. The wall surface portion 6f has a planar shape. The wall surface portion 6f has a triangular shape.

An inner portion inside in the radial direction of the first inclined portion 6 is a valley portion in which the pair of wall surface portions 6f are connected to each other. The valley portion of the first inclined portion 6 is located inward in the radial direction toward the one end portion in the axial direction.

According to the fourth modification example, a step of forming the first inclined portion 6 can be simplified, and the configuration can be easily manufactured.

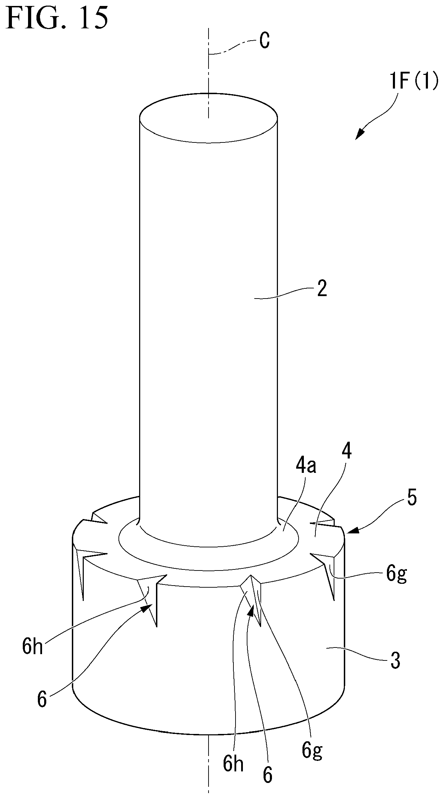

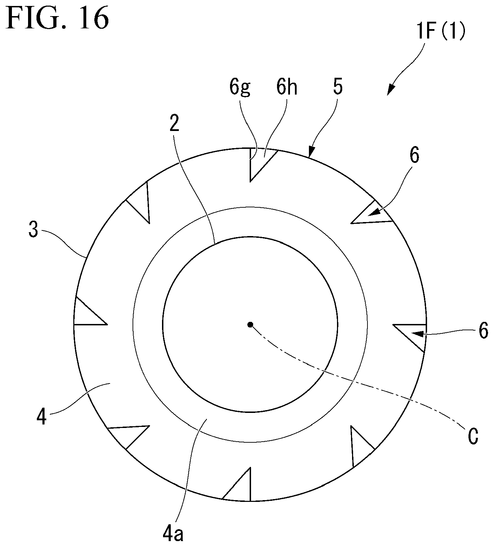

Figs. 15 and 16 show a base material 1F(1) for a hard sintered material according to a fifth modification example of the present embodiment. In the fifth modification example, the first inclined portion 6 has a first wall surface portion 6g and a second wall surface portion 6h. The first wall surface portion 6g and the second wall surface portion 6h are connected to each other in the circumferential direction.

The first wall surface portion 6g has a planar shape spreading in a direction perpendicular to the circumferential direction (axial direction and radial direction). The first wall surface portion 6g has a triangular shape.

The second wall surface portion 6h is separated from the first wall surface portion 6g in the circumferential direction toward the outer side in the radial direction. The second wall surface portion 6h has a planar shape. The second wall surface portion 6h has a triangular shape.

An inner portion inside in the radial direction of the first inclined portion 6 is a valley portion in which the first wall surface portion 6g and the second wall surface portion 6h are connected to each other. The valley portion of the first inclined portion 6 is located inward in the radial direction toward the one end portion in the axial direction.

According to the fifth modification example, a step of forming the first inclined portion 6 can be simplified, and the configuration can be easily manufactured.

### <Second Embodiment>

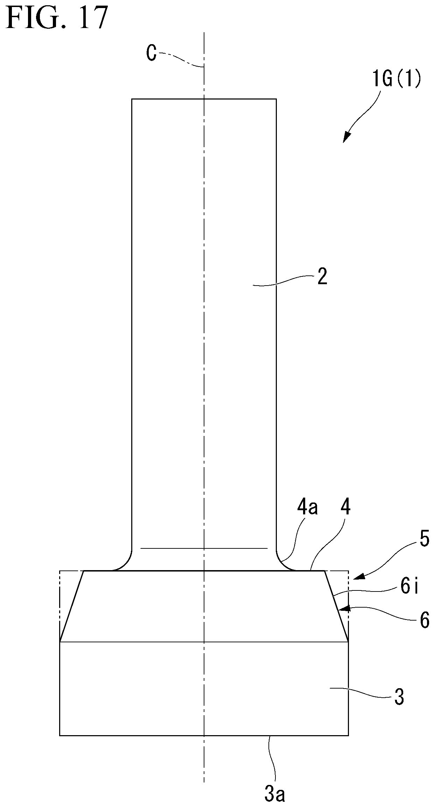

Next, a base material 1G(1) for a hard sintered material according to a second embodiment of the present invention will be described with reference to Fig. 17. In the second embodiment, the same reference numerals will be assigned to the same components as those in the first embodiment, and description thereof will be omitted.

In the base material 1G of the present embodiment, the first inclined portion 6 is disposed over the entire circumference of the corner portion 5. The first inclined portion 6 has a tapered surface 6i. The tapered surface 6i has a tapered shape located inward in the radial direction toward the one end portion in the axial direction.

In the present embodiment, the first inclined portion 6 has an annular shape around the central axis C, and is provided over an entire area in the circumferential direction in the corner portion 5 where the outer peripheral surface of the larger-diameter portion 3 and the base material end surface 4 are connected. Therefore, the capacity of the first inclined portion 6, that is, the capacity in which the first inclined portion 6 is recessed from an outer shape of the virtual corner portion 5 shown by a two-dot chain line in Fig. 17 can be stably and reliably secured, and the volume of the base material 1G can be minimized. In addition, during sintering, the capacity of the second inclined portion 25 for filling the first inclined portion 6 can be reliably secured, and the volume of the cylinder portion 20 can be reliably secured. In this manner, the thermal stress received from the base material 1G during the brazing can be stably reduced by the cylinder portion 20 sintered integrally with the base material 1G. In addition, during the brazing, stress can be easily released by the first inclined portion 6 having a large capacity, and it is possible to stably prevent the occurrence of cracks in the hard sintered material 10.

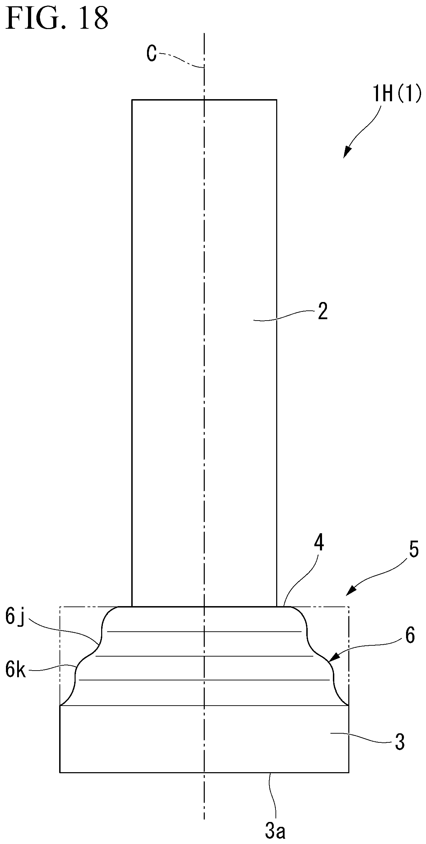

Fig. 18 shows a base material 1H(1) for a hard sintered material according to a modification example of the present embodiment. In the modification example, the first inclined portion 6 has a recessed curved face portion 6j having a recessed curved face shape, and a convex surface portion 6k having a convex surface shape.

The recessed curved face portion 6j has a circular ring shape around the central axis C. In a vertical sectional view along the central axis C, the recessed curved face portion 6j has a recessed curved line shape recessed inward in the radial direction and toward the other side in the axial direction. The recessed curved face portion 6j is located inward in the radial direction toward the one end portion in the axial direction. A plurality of the recessed curved face portions 6j are provided at an interval from one another in the axial direction.

The convex surface portion 6k has a circular ring shape around the central axis C. In the vertical sectional view along the central axis C, the convex surface portion 6k has a convex surface shape protruding outward in the radial direction and toward the one end portion in the axial direction. The convex surface portion 6k is located inward in the radial direction toward the one end portion in the axial direction. A plurality of the convex surface portions 6k are provided at an interval from each other in the axial direction.

The recessed curved face portion 6j and the convex surface portion 6k are disposed alternately in the axial direction.

In the modification example, a surface area of the wall surface (recessed curved face portion 6j and convex surface portion 6k) forming the first inclined portion 6 can be reliably secured, and the bonding strength between the first inclined portion 6 and the second inclined portion 25 of the cylinder portion 20 sintered integrally with the base material 1H can be improved. In addition, it is possible to make it difficult to generate a location on which the thermal stress is concentrated near the wall surface of the first inclined portion 6 and the wall surface of the second inclined portion 25, and it is possible to further prevent the occurrence of cracks in the hard sintered material 10. Since the recessed curved face portion 6j is provided, it is easy to more reliably secure the capacity of the first inclined portion 6.

The present invention is not limited to the above-described embodiments. For example, as will be described below, the configuration can be changed within the scope not departing from the concept of the present invention.

In the above-described embodiments, an example has been described in which the cutting tool 50 is the end mill. However, the present invention is not limited thereto. The cutting tool 50 may be a reamer or a drill in addition to the end mill, and other rotary cutting tools. For example, when the cutting tool 50 is the drill, the cutting portion 51 includes a tip cutting edge, thinning, a margin, and a body clearance, in addition to the chip discharge flute 55 and the cutting edge 56.

In addition, all of the configurations (components) described in the embodiments, modification examples, and proviso may be combined with each other within the scope not departing from the concept of the present invention. Alternatively, additions, omissions, or substitutions of the configurations, and other modifications can be made. In addition, the present invention is not limited to the above-described embodiments, and is limited only by the appended claims.

### EXAMPLES

Hereinafter, the present invention will be specifically described with reference to an Example. However, the present invention is not limited to the Example.

As an Example of the present invention and a Comparative Example (example having no first inclined portion 6), each base material was prepared. Common configurations in the examples and the comparative example are as follows.
- Material of base material: made of cemented carbide
- Young's modulus of base material: 570 GPa
- Diameter D of larger-diameter portion 3: 12 mm
- Diameter d of the smaller-diameter portion 2: 6 mm
- Length L1 in axial direction of larger-diameter portion 3: 7mm
- Length L2 in axial direction of smaller-diameter portion 2: 21 mm
- Radius of curvature of concave corner surface portion 4a: 1mm

Examples 1 to 9 adopted the configurations of the first embodiment or the second embodiment described above. As shown in Table 1 below, a shape (groove (number) or entire circumference), the angle θ, the maximum depth GD, and the groove width GW of the first inclined portion 6 were set. Each dimension of the base material was measured with a three-dimensional shape-measuring device.

Powder materials having the shapes of the base materials of Examples 1 to 9 and the Comparative Example were sintered together with a powdery raw material of the cylinder portion by using a method disclosed in US Patent No. 5031484, and hard sintered materials were manufactured. The Young's modulus of the sintered cylinder portion was 920 GPa. The outer circumference of the hard sintered material was finished into a cylindrical shape by using a processing machine such as a wire electric discharge machine and a cylindrical grinding machine. Thereafter, the end surface (bottom surface) 3a of the larger-diameter portion 3 which faces the other side in the axial direction was subjected to a grinding operation by approximately 0.2 mm with a surface-grinding machine. In this manner, a plane perpendicular to the central axis C was formed.

The Ag brazing material was applied to the end surface (bonding surface) 52a facing the one end portion in the axial direction of the shank 52 made of cemented carbide. The end surface 3a of the hard sintered material was adhered to the end surface 52a, and both of these were bonded to each other at a temperature of 760°C under vacuum by using a high-frequency brazing device.

In order to evaluate the hard sintered materials by using the base materials of Examples 1 to 9 and the Comparative Example, a fluorescent flaw detection inspection was performed to confirm whether or not cracks occurred in the hard sintered material. When cracks occurred, it was evaluated that the base material could be used as a product (product available) or could not be used as a product (product unavailable). Test results are shown in Table 1.

**[Table 1]**

| | Shape of first inclined portion 6 flute (No.) or entire circumference | Angle θ | Maximum depth GD (ratio to diameter D) | Flute width GW (ratio to diameter D) | Young's modulus of base material 1 | Young's modulus of Cylinder portion 20 | Presence or absence of cracks |
|---|---|---|---|---|---|---|---|
| Example 1 | flute (8) | 30° | 2 mm (16.7%) | 0.5 mm (4.2%) | 570 GPa | 920 GPa | present (cracks in a part of flute, product available) |
| Example 2 | flute (4) | 5° | 1.5 mm (12.5%) | 2.5 mm (20.8%) | 570 GPa | 920 GPa | present (cracks in a part of flute, product available) |
| Example 3 | flute (6) | 85° | 0.6 mm (5.0%) | 0.6 mm (5.0%) | 570 GPa | 920 GPa | present (texture deterioration in a part of flute, product available) |
| Example 4 | flute (5) | 55° | 0.5 mm (4.2%) | 3 mm (25.0%) | 570 GPa | 920 GPa | present (cracks in a part of flute, product available) |
| Example 5 | flute (8) | 63° | 1.5 mm (12.5%) | 1.2 mm (10.0%) | 570 GPa | 920 GPa | absent |
| Example 6 | flute (3) | 20° | 3 mm (25.0%) | 2 mm (16.7%) | 570 GPa | 920 GPa | absent |
| Example 7 | entire circumference | 5° | 1.5 mm (12.5%) | - | 570 GPa | 920 GPa | present (cracks in a part in circumferential direction, product available) |
| Example 8 | entire circumference | 30° | 1.5 mm (12.5%) | - | 570 GPa | 920 GPa | absent |
| Example 9 | entire circumference | 80° | 1.5 mm (12.5%) | - | 570 GPa | 920 GPa | present (texture deterioration in a part in circumferential direction, product available) |
| Comparative Example | - | - | - | - | 570 GPa | 920 GPa | present (cracks in entire circumference, product unavailable) |

As shown in Table 1, all of the hard sintered materials 10 using the base materials 1 of Examples 1 to 9 of the present invention could be used as the product. Specifically, in a case where cracks or texture deterioration was observed in a part of the flute of the first inclined portion 6 or a part in the circumferential direction, when the hard sintered material 10 was subjected to a grinding operation to form the cutting portion 51, it was possible to cope with a portion having a problem by removing the portion as the chip discharge flute 55. In addition, in Examples 5, 6, and 8 out of Examples 1 to 9, the occurrence of cracks was not observed, and satisfactory results were obtained.

On the other hand, in the comparative example, cracks occurred on the entire circumference in the circumferential direction, and the base material could not be used as the product.

### INDUSTRIAL APPLICABILITY

According to the base material for the hard sintered material, the hard sintered material, and the cutting tool of the present invention, it is possible to prevent the occurrence of cracks in the hard sintered material. Therefore, the present invention is industrially applicable.

### [Reference Signs List]

- 1 (1A, 1B, 1C, 1D, IE, IF, 1G, 1H):: Base material
- 2:: Smaller-diameter portion
- 3:: Larger-diameter portion
- 4:: Base material end surface
- 5:: Corner portion (base material corner portion)
- 24:: Corner portion (cylinder portion corner portion)
- 6:: First inclined portion
- 6a:: First inclined surface (inclined surface)
- 6b:: First side wall surface (side wall surface)
- 6e, 6j:: Recessed curved face portion
- 6k:: Convex surface portion
- 10:: Hard sintered material
- 20:: Cylinder portion
- 23:: Cylinder portion end surface
- 25:: Second inclined portion
- 50:: Cutting tool
- 51:: Cutting portion
- 52:: Shank
- 55:: Chip discharge flute
- 56:: Cutting edge
- C:: Central axis
- D:: Outer diameter (diameter) of larger-diameter portion
- GD:: Maximum depth of first inclined portion in radial direction
- GW:: Length of first inclined portion in circumferential direction
- VP:: Virtual plane
- θ:: Angle

## Claims

1. A base material for a hard sintered material having a multi-stage columnar shape having a central axis and extending in an axial direction of the central axis, the base material comprising:
a smaller-diameter portion;
a larger-diameter portion having an outer diameter larger than an outer diameter of the smaller-diameter portion;
a base material end surface located between a one end portion of an outer peripheral surface of the larger-diameter portion in the axial direction and the other end portion of the smaller-diameter portion in the axial direction, and facing toward the one end portion in the axial direction; and
a first inclined portion disposed in at least a portion of an annular corner portion in a circumferential direction where the outer peripheral surface of the larger-diameter portion and the end surface of the base material are connected,
wherein the first inclined portion is located inward in a radial direction toward the one end portion in the axial direction.

2. The base material for a hard sintered material according to Claim 1,
wherein in a vertical sectional view along the central axis, an angle formed between a virtual plane perpendicular to the central axis and the first inclined portion is 10° or larger and 75° or smaller.

3. The base material for a hard sintered material according to Claim 1 or 2,
wherein a maximum depth in which the first inclined portion is recessed inward in the radial direction from the outer peripheral surface of the larger-diameter portion is equal to or larger than 5% of a diameter of the larger-diameter portion, and is equal to or smaller than a value of a difference between a radius of the smaller-diameter portion and a radius of the larger-diameter portion.

4. The base material for a hard sintered material according to any one of Claims 1 to 3,
wherein the first inclined portion has a recessed shape whose depth in the radial direction becomes deeper toward the one end portion in the axial direction, and
a plurality of the first inclined portions are provided in the corner portion at an interval from each other in a circumferential direction.

5. The base material for a hard sintered material according to Claim 4,
wherein a length of the first inclined portion in the circumferential direction is equal to or larger than 10% and equal to or smaller than 80% of a diameter of the larger-diameter portion.

6. The base material for a hard sintered material according to Claim 4 or 5,
wherein the first inclined portion has
an inclined surface located inward in the radial direction toward the one end portion in the axial direction, and
a pair of side wall surfaces connected to both ends of the inclined surface in the circumferential direction, and disposed opposite to each other at an interval from each other in the circumferential direction.

7. The base material for a hard sintered material according to Claim 6,
wherein the pair of side wall surfaces are separated from each other in the circumferential direction toward an outer side in the radial direction.

8. The base material for a hard sintered material according to any one of Claims 1 to 3,
wherein the first inclined portion is disposed over an entire circumference of the corner portion.

9. The base material for a hard sintered material according to any one of Claims 1 to 8,
wherein the first inclined portion has a concave surface portion having a concave surface shape.

10. The base material for a hard sintered material according to any one of Claims 1 to 9,
wherein the first inclined portion has a convex surface portion having a convex surface shape.

11. A hard sintered material, comprising:
the base material for a hard sintered material according to any one of Claims 1 to 10; and
a cylinder portion having a cylindrical shape covering the smaller-diameter portion, having a lower coefficient of linear expansion and higher hardness than those of the base material for the hard sintered material, and sintered integrally with the base material for the hard sintered material,
wherein an inner peripheral surface of the cylinder portion is bonded to an outer peripheral surface of the smaller-diameter portion,
a cylinder portion end surface facing the other side of the cylinder portion in the axial direction is bonded to the base material end surface,
the cylinder portion has a second inclined portion disposed in at least a portion in the circumferential direction of an annular corner portion where an outer peripheral surface of the cylinder portion and the cylinder portion end surface are connected, and
the second inclined portion is located inward in the radial direction toward one side in the axial direction, and is bonded to the first inclined portion.

12. The hard sintered material according to Claim 11,
wherein the base material for the hard sintered material has a Young's modulus of 300 GPa or higher, and
the cylinder portion has a Young's modulus of 600 GPa or higher.

13. The hard sintered material according to any one of Claim 11 or 12,
wherein the base material for the hard sintered material is made of any one of cemented carbide, cermet, and ceramics, and
the cylinder portion is made of any one of polycrystalline diamond and polycrystalline cubic boron nitride.

14. A cutting tool, comprising:
a cutting portion in which a chip discharge flute and a cutting edge which extend in an axial direction are provided in an outer peripheral portion of the hard sintered material according to any one of Claims 11 to 13; and
a shank connected to the cutting portion in the axial direction,
wherein the cutting edge is disposed in the cylinder portion.
